# EUROPEAN PATENT APPLICATION

(11) **EP 3 656 984 A1**
(43) Date of publication of application: **27.05.2020**
(21) Application number: 19201603.8
(22) Date of filing: 07.10.2019
(51) Int. Cl.: F01D 5/30

(54) **BLADE MOUNTING**

(30) Priority: 08.11.2018 GB 201818203
(71) Applicant: Rolls-Royce plc, London N1 9FX (GB)
(72) Inventor: Whitehead, Christopher, Derby, Derbyshire DE24 8BJ (GB)
(74) Representative: Rolls-Royce plc

(57) **Abstract**

An aerofoil blade having a root portion (100) provided with a low friction coating layer (102). The low friction coating layer is affixed to the root portion by an adhesive layer (104). The adhesive layer has a service temperature of 125 °C or more, for example 140 °C or more.

## Description

### Field of the Disclosure

The present disclosure relates to an aerofoil blade having a root portion for mounting in a rotor disc within a gas turbine engine. In particular, the present disclosure relates to an aerofoil blade (e.g. a composite fan blade) having a root portion provided with a low friction coating.

### Background

A fan blade, e.g. a composite fan blade in a gas turbine engine, is typically provided with a root portion which is received in a slot in a rotor disc. In order to minimise wear and contact stresses, the root portion is typically provided with a low friction coating layer (e.g. a polytetrafluoroethylene (PTFE) impregnated fabric layer). The low friction coating layer is affixed to the root portion using an adhesive layer interposed between the root portion and the coating layer.

Mechanical breakdown of the coating layer has previously been observed and in order to mitigate this, the contact area between the root portion of the fan blade and the slot surface is increased (to reduce the contact pressure between the root portion and the slot surface). However, there is a limit to the extent contact pressure can be reduced and breakdown mitigated.

There is the need for an improved fan blade root portion that can withstand increased contact pressure against the slot surface within the rotor disc (which in turn would allow a smaller fan blade root portion) and which can allow more generous operational limits (e.g. operation of an aircraft in more serious cross-wind conditions).

### Summary

The present disclosure provides an aerofoil blade for a gas turbine engine, a method of affixing a low friction coating layer to a root portion of an aerofoil blade for a gas turbine engine, and a gas turbine engine, as set out in the appended claims.

According to a first aspect there is provided an aerofoil blade for a gas turbine engine, the aerofoil blade having a root portion provided with a low friction coating layer, the low friction coating layer being affixed to the root portion by an adhesive layer, wherein the adhesive layer has a service temperature of 125 °C or more.

The adhesive layers are conventionally selected to have an operational temperature capability substantially matching the operational temperature of the fan blade/rotor disc. The operational temperature of the fan blade/disc is typically determined either by thermal modelling or by studying historical data. Either method determines the operational temperature and then an adhesive with an appropriate service temperature is selected. Adhesives used to bond low friction coating layers to a fan blade root portion include Henkel's EA9696 which has a service temperature of 121 °C and 3M's AF163-2 which has a service temperature of 107 °C.

The present inventors have found that the mechanical breakdown of the coating layer is caused by a structural breakdown in the adhesive layer between the root portion and the low friction coating layer. They have found that this structural breakdown in the adhesive layer is caused by thermal degradation of the adhesive layer arising from a substantial unexpected localised temperature rise caused by frictional energy dissipation from the relative slip movement between the root portion and disc during blade vibration. The relative slip movement subsequently causes mechanical damage to the low friction coating layer. By using an adhesive having a higher service temperature (higher than the predicted operational temperature of the aerofoil blade/rotor disc), the adhesive layer remains unaffected by the heating resulting from the relative slip movement and thus the low friction coating layer remains mechanically sound. Increasing service temperature capability of the adhesive may result in a greater increase in longevity of the low friction coating than, for example, increasing bond strength of the adhesive at the predicted steady state operating temperature of the blade root, leading the inventors to conclude that the transient peak temperatures the blade root experiences in operation are significantly higher than previously believed.

Optional features will now be set out. These are applicable singly or in any combination with any aspect.

In some embodiments, the adhesive layer has a service temperature of 130 °C or more, 135 °C or more, 140 °C or more, or 145 °C or more, or 150 °C or more, or 175 °C or more.

The service temperature of an adhesive is defined as the highest temperature at which the adhesive still retains 6.9 MPa (1000psi) using an overlap shear test method such as ASTM D1002.

An example of a suitable adhesive for forming the adhesive layer is Henkel's EA9695 which has a service temperature of over 149 °C or 3M's AF-31 which has a service temperature of over 232 °C.

In some embodiments, the aerofoil blade comprises composite materials in the blade root poriton. In some embodiments, the aerofoil blade is a composite aerofoil blade e.g. a composite fan blade for a gas turbine engine. The aerofoil blade may be formed of multiple layers of laminated carbon epoxy composite. The localised temperature rise of the blade root is believed to be further increased in blade roots comprising composite materials compared to blade roots comprising metallic alloys. The composite materials may comprise carbon fibre and organic matrix composite materials (for example carbon fibre in an epoxy based matrix).

In other embodiments, the aerofoil blade is a metallic aerofoil blade e.g. a titanium aerofoil blade.

In some embodiments, especially where the root portion is formed of a composite material, the low friction coating layer comprises a PTFE impregnated fabric layer such as DuPont's Vespel™ CP-0664 or Kamatics™ Ultralight Duty ST Wear stip.

In some embodiments, the root portion is formed of a metallic material e.g. titanium, the low friction coating layer may comprise a molybdenum disulphide coating with a CuNiln carrier layer.

In some embodiments, the root portion further comprises a metallic foil interposed between the adhesive layer and the low friction coating layer (especially the PTFE impregnated fabric layer). The metallic foil may be formed of titanium or stainless steel, for example. The metallic foil may have a thickness of 0.1 to 0.5 mm.

The metallic foil may be bonded to the low friction coating layer by a further adhesive layer. The further adhesive layer also has a service temperature of 125 °C or above.

A commercially available low friction coating layer with a metallic foil layer is DuPont's ASB-0670.

In a second aspect there is provided a method of affixing a low friction coating layer to a root portion of an aerofoil blade, said method comprising applying an adhesive to the root portion, affixing the low friction coating layer to the adhesive and curing the adhesive to form an adhesive layer having a service temperature of 125 °C or more.

In some embodiments, the method comprises curing the adhesive to form an adhesive layer having a service temperature of 130 °C or more, 135 °C or more, 140 °C or more, or 145 °C or more, or 150 °C or more, or 175 °C or more.

The adhesive and the low friction coating layer may be as described above for the first aspect. For example, the method may further comprise providing a metallic foil layer (as described for the first aspect) between the adhesive layer and the low friction coating layer.

In some embodiments, the method further comprises applying a lubricator to the root portion with the low friction coating layer prior to mounting in the rotor disc. The lubricator may be applied by spraying or painting. The lubricator may comprise a PTFE lubrication spray or paint.

In some embodiments, the root portion comprises composite materials, and optionally, curing the adhesive may be performed at the same time as curing the composite materials.

In a third aspect, there is provided a gas turbine engine comprising at least one aerofoil blade according to the first aspect. In some embodiments, the gas turbine engine comprises a plurality of aerofoil blades according to the first aspect, circumferentially arranged around a rotor disc.

The plurality of aerofoil blades and rotor disc may form the fan section of the gas turbine engine i.e. the aerofoil blades may be fan blades e.g. composite or metallic fan blades.

Accordingly, the present disclosure relates to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above).

Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
- **Figure 1**: is a sectional side view of a gas turbine engine;
- **Figure 2**: is a close up sectional side view of an upstream portion of a gas turbine engine;
- **Figure 3**: is a partially cut-away view of a gearbox for a gas turbine engine; and
- **Figure 4**: is view of a first example of a root portion of a composite fan blade; and
- **Figure 5**: is a view of a second example of a root portion of a composite fan blade.

### Detailed Description and Further Optional Features

Embodiments will now be described by way of example only, with reference to the Figures.

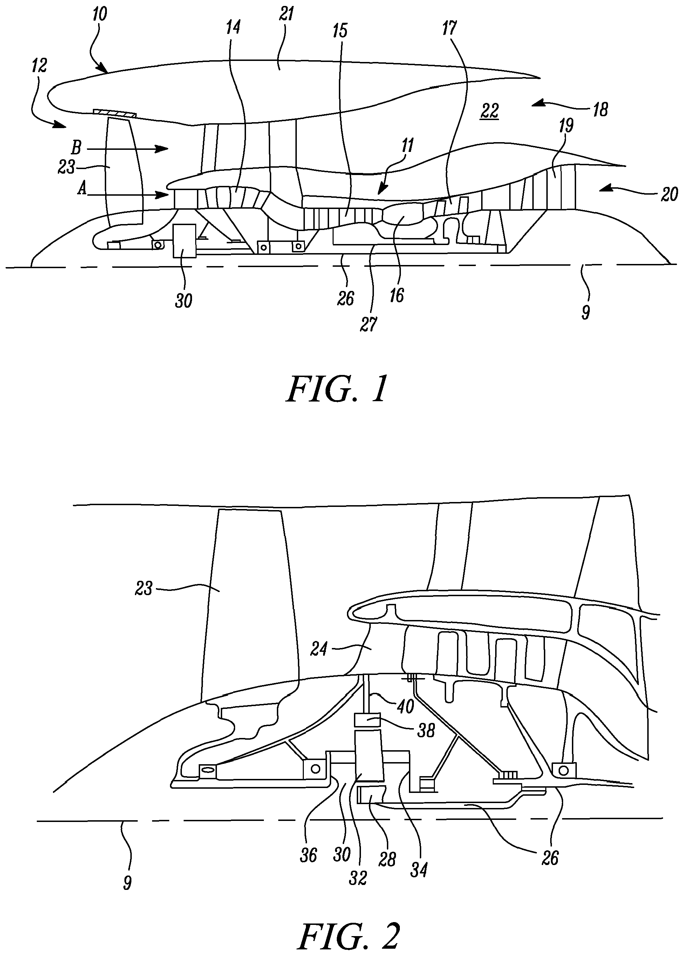

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26.

In use, the core airflow A is accelerated and compressed by the low pressure compressor 14 and directed into the high pressure compressor 15 where further compression takes place. The compressed air exhausted from the high pressure compressor 15 is directed into the combustion system 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust.

Arrangements of the present disclosure may be particularly, although not exclusively, beneficial for fans 23 that are driven via a gearbox 30. Accordingly, the gas turbine engine may comprise a gearbox 30 that receives an input from the core shaft 26 and outputs drive to the fan 23 so as to drive the fan 23 at a lower rotational speed than the core shaft 26. The input to the gearbox 30 may be directly from the core shaft 26, or indirectly from the core shaft 26, for example via a spur shaft and/or gear.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

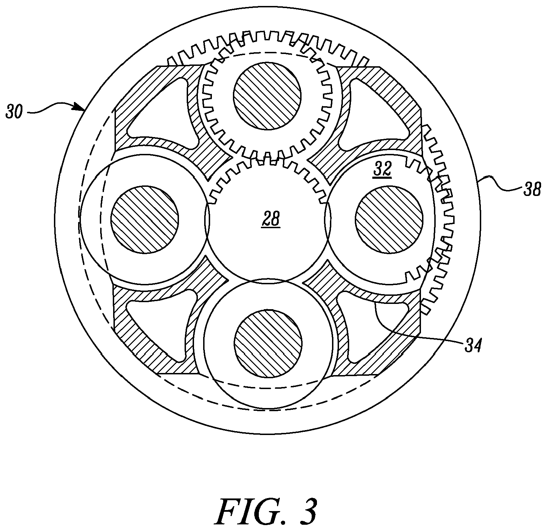

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

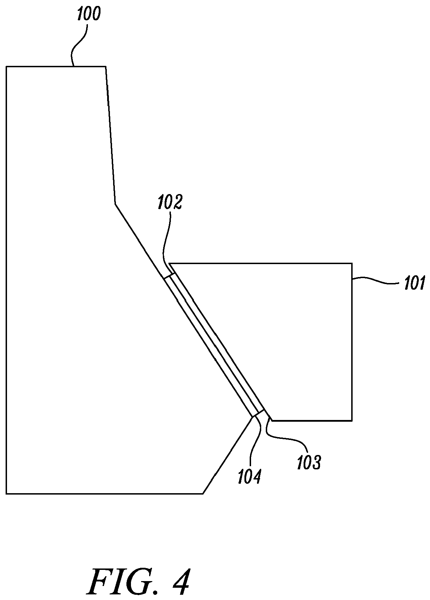

The fan 23 comprises a plurality of circumferentially-arranged, radially-extending composite fan blades formed of laminated layers of carbon epoxy composite. As shown in **Figure 4**, each fan blade has dovetail root portion 100 which is received in a slot in a rotor disc 101. The root portion 100 has a low friction coating layer comprising a PTFE impregnated fabric layer 102 such as Dupont's Vespel™ CP-0664. The PTFE fabric layer 102 faces the contact surface 103 of the slot in the rotor disc 101.

The PTFE fabric layer 102 is affixed to the root portion by an adhesive layer 104 having a service temperature higher than 125 °C. For example, the PTFE fabric layer may be affixed to the root portion using Henkel's EA-9695 which has a service temperature greater than 149 °C.

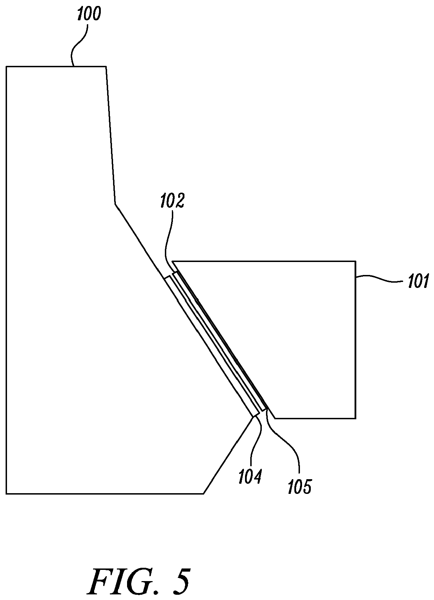

**Figure 5** shows another example where the PTFE fabric layer 102 is backed by a metallic foil layer 105 which is interposed between the PTFE fabric layer 102 and the adhesive layer 104.

By using an adhesive layer 104 having a service temperature greater than 125 °C, 130 °C, 140 °C or 145 °C etc, localised heating arising from the relative slip movement between the root portion 100 and rotor disc 101 during blade vibration does not result in thermal degradation of the adhesive layer 104 and thus the PTFE fabric layer 102 remains mechanically sound.

It will be understood that the disclosure is not limited to the embodiments above-described and various modifications and improvements can be made without departing from the concepts described herein but within the scope of the following claims. Except where mutually exclusive, any of the features may be employed separately or in combination with any other features and the disclosure extends to and includes all combinations and subcombinations of one or more features described herein.

## Claims

1. An aerofoil blade for a gas turbine engine (10), the aerofoil blade having a root portion (100) provided with a low friction coating layer (102), the low friction coating layer being affixed to the root portion by an adhesive layer (104), wherein the adhesive layer has a service temperature of 125 °C or more.

2. The aerofoil blade of claim 1, wherein the aerofoil blade is a composite aerofoil blade.

3. The aerofoil blade of claim 1 or 2, wherein the adhesive layer (104) has a service temperature of 130 °C or more,

4. The aerofoil blade of claim 1 or 2, wherein the adhesive layer (104) has a service temperature of 140 °C or more.

5. The aerofoil blade of any one of the preceding claims, wherein the low friction coating layer (102) comprises a PTFE impregnated fabric layer.

6. The aerofoil blade of any one of the preceding claims, wherein the root portion (100) further comprises a metallic foil (105) interposed between the adhesive layer (104) and the low friction coating layer (102).

7. A method of affixing a low friction coating layer (102) to a root portion (100) of an aerofoil blade for a gas turbine engine (10), said method comprising applying an adhesive to the root portion, affixing the low friction coating layer to the adhesive and curing the adhesive to form an adhesive layer (104) having a service temperature of 125 °C or more.

8. The method of claim 7, comprising curing the adhesive to form an adhesive layer (104) having a service temperature of 130 °C or more.

9. The method of claim 7, comprising curing the adhesive to form an adhesive layer (104) having a service temperature of 140 °C or more.

10. The method of any one of claims 7 to 9, further comprising providing a metallic foil layer (105) between the adhesive layer (104) and the low friction coating layer (102).

11. The method of any one of claims 7 to 10, further comprising applying a lubricator to the root portion (100) with the low friction coating layer (102).

12. A gas turbine engine (10) comprising at least one aerofoil blade according to any one of claims 1 to 6.

13. The gas turbine of claim 12, comprising a fan section formed of a plurality of aerofoil blades according to any one of claims 1 to 6, circumferentially-arranged around a rotor disc (101).
